# EUROPEAN PATENT APPLICATION

(11) **EP 4 474 869 A1**
(43) Date of publication of application: **11.12.2024**
(21) Application number: 22929355.0
(22) Date of filing: 03.03.2022
(51) Int. Cl.: G01S 17/93, G01S 17/88, G01S 7/481

(54) **SCANNING METHOD AND APPARATUS**

(71) Applicant: Huawei Technologies Co., Ltd., Shenzhen, Guangdong 518129 (CN)
(72) Inventor: WANG, Chao, Shenzhen, Guangdong 518129 (CN)
(74) Representative: Maiwald GmbH
(86) International application number: PCT/CN2022/079144
(87) International publication number: WO 2023/164906

(57) **Abstract**

A scanning method and apparatus are disclosed, and may be applied to fields such as autonomous driving and intelligent driving, and in particular, to detection of a laser sensor. The method includes: determining a scanning area, where the scanning area is a region of interest, the scanning area includes a first scanning area and a second scanning area, the first scanning area and the second scanning area overlap in a field of view, and a resolution of the first scanning area is greater than a resolution of the second scanning area (301); and scanning the scanning area (302). The method enriches layout manners of regions of interest in a full field of view, effectively improves freedom of design and regulation for the regions of interest, to continuously focus on a specific target and mainly detect the specific target, and improves resource utilization.

## Description

### TECHNICAL FIELD

This application relates to the field of laser detection technologies, and in particular, to a scanning method and apparatus.

### BACKGROUND

During daily driving, a radar system often needs to focus on different areas at different moments, to form one or more regions of interest (regions of interest, ROIs), and effectively detect, identify, and classify various complex road conditions through the ROIs.

However, a current ROI scanning manner usually has the following problems: Freedom and flexibility of regulation are insufficient; an actual point cloud resolution is limited by an engineering error and coupling efficiency; and same-weight attention strategies are used for targets in a full field of view, and consequently resources of similar proportions are consumed for collecting important information and unimportant information, and true adaptive ROI adjustment cannot be implemented.

### SUMMARY

Embodiments of this application provide a scanning method and apparatus, to implement better adaptive ROI adjustment.

According to a first aspect, an embodiment of this application provides a scanning method. The method includes:
determining a scanning area, where the scanning area is a region of interest, and the scanning area includes a first scanning area and a second scanning area; the first scanning area and the second scanning area overlap in a field of view; and a resolution of the first scanning area is greater than a resolution of the second scanning area; and scanning the scanning area.

According to the foregoing method, in an actual detection process, there are often different resolution requirements based on different detection scenarios and different resolution requirements in different areas in a full field of view. However, in a current scanning manner, same-weight attention strategies are used for targets in the full field of view, and freedom and flexibility of regulation are insufficient, and cannot meet an actual detection requirement. Therefore, in this application, the region of interest is divided into at least the first scanning area and the second scanning area, and the first scanning area and the second scanning area are set with different resolutions. In this way, in the actual detection process, resolutions of corresponding scanning areas may be set based on different resolution requirements, and flexible regulation can be performed, so that requirements of the detection apparatus for different resolutions can be met, system resources can be better adaptively allocated, and continuous attention and focus detection on a specific target are implemented. This improves resource utilization. For example, the first scanning area and the second scanning area with different resolutions are set, so that in a full field of view range, resolutions of some fields of view are high, and resolutions of some fields of view are low. In addition, a position relationship, an area size, an overlapping size, and the like of the first scanning area and the second scanning area may be adjusted, so that a layout manner of the regions of interest in the full field of view can be effectively enriched, various scanning patterns may be generated based on an actual detection requirement, and adaptability and freedom are higher.

In the foregoing embodiment, an overlapping area between the first scanning area and the second scanning area may be understood as a new scanning area. A resolution of the overlapping area may be a sum of the resolution of the first scanning area and the resolution of the second scanning area. A size of the overlapping area may be implemented by setting and adjusting a position relationship between the first scanning area and the second scanning area, a size of the overlapping area, and the like based on a detection requirement. In a possible implementation, a vertical field of view of the first scanning area overlaps a vertical field of view of the second scanning area.

In this implementation, when the vertical field of view of the first scanning area overlaps the vertical field of view of the second scanning area, the following pattern may be formed in the field of view.

In the field of view, heights of the first scanning area and the second scanning area are the same, but widths of the first scanning area and the second scanning area are different; or in the field of view, heights of the first scanning area and the second scanning area are different, but widths of the first scanning area and the second scanning area are the same; or in the field of view, heights of the first scanning area and the second scanning area are different, and widths of the first scanning area and the second scanning area are different.

According to the foregoing method, this embodiment of this application provides a case of a scanning area pattern that may be presented in a field of view. For example, when the first scanning area and the second scanning area included in the field of view overlap in the field of view, a plurality of different field of view solutions may be constructed, and forms are diversified and adaptability is higher.

In a possible implementation, a vertical start position of the first scanning area is different from a vertical start position of the second scanning area.

In this implementation, based on a case in which the first scanning area and the first scanning area overlap in the field of view, when the vertical start position of the first scanning area is different from the vertical start position of the second scanning area, the following pattern may be formed in the field of view.

In the field of view, heights of the first scanning area and the second scanning area are the same, but widths of the first scanning area and the second scanning area are different; or in the field of view, heights of the first scanning area and the second scanning area are different, and widths of the first scanning area and the second scanning area are different.

According to the foregoing method, in this embodiment of this application, a case in which the first scanning area and the second scanning area overlap, and the vertical start position of the first scanning area is different from the vertical start position of the second scanning area is set, to further specifically detail a pattern that may occur in the field of view. For example, a pattern presented in the field of view may be that heights of the first scanning area and the second scanning area are the same, but widths of the first scanning area and the second scanning area are different; or the pattern presented in the field of view may also be that heights of the first scanning area and the second scanning area are different, and widths of the first scanning area and the second scanning area are different.

In a possible implementation, a vertical start position of the first scanning area is the same as a vertical start position of the second scanning area.

In this implementation, based on a case in which the first scanning area and the first scanning area overlap in the field of view, when the vertical start position of the first scanning area is the same as the vertical start position of the second scanning area, the following pattern may be formed in the field of view.

In the field of view, heights of the first scanning area and the second scanning area are different, but widths of the first scanning area and the second scanning area are the same.

According to the foregoing method, in this embodiment of this application, a case in which the first scanning area and the second scanning area overlap, and the vertical start position of the first scanning area is the same as the vertical start position of the second scanning area is set, to further specifically detail a pattern that may occur in the field of view. For example, a pattern presented in the field of view may be that heights of the first scanning area and the second scanning area are different, but widths of the first scanning area and the second scanning area are the same.

In a possible implementation, the first scanning area is in a vertical long strip shape in the field of view, and the second scanning area is in a horizontal long strip shape in the field of view; or the first scanning area is in a horizontal long strip shape in the field of view, and the second scanning area is in a vertical long strip shape in the field of view.

In this implementation, based on a case in which the resolution of the first scanning area is higher than the resolution of the second scanning area, and the first scanning area and the second scanning area overlap, the following pattern may be formed in the field of view.

In the field of view, the first scanning area and the second scanning area form a 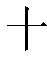 -shaped pattern, where the first scanning area may be a long strip area in a vertical direction in the 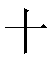 -shaped pattern, and the second scanning area may be a long strip area in a horizontal direction in the 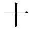 -shaped pattern; or the first scanning area may be a long strip area in a horizontal direction in the 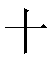 -shaped pattern, and the second scanning area may be a long strip area in a vertical direction in the 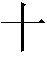 -shaped pattern.

According to the foregoing method, this embodiment of this application provides the 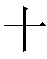 -shaped scanning pattern, and a presentation manner is more novel and vivid.

In a possible implementation, when a quantity of first scanning areas is M and a quantity of second scanning areas is N, vertical fields of view of one or more of the M first scanning areas overlap vertical fields of view of one or more of the N second scanning areas, where M and N are positive integers.

In this implementation, in embodiments of this application, the quantity of first scanning areas and the quantity of second scanning areas are increased, so that more diversified scanning patterns are provided.

For example, when the quantity of first scanning areas is two and the quantity of second scanning areas is two, a 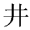 -shaped pattern may be formed in the field of view, where the two first scanning areas may be long strip areas in a vertical direction in the 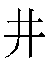 -shaped pattern, and the two second scanning areas may be long strip areas in a horizontal direction in the 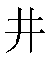 -shaped pattern; or the two first scanning areas may be long strip areas in a horizontal direction in the 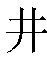 -shaped pattern, and the two second scanning areas may be long strip areas in a vertical direction in the 4 -shaped pattern.

For another example, when the quantity of first scanning areas is three and the quantity of second scanning areas is one, a 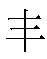 -shaped pattern may be formed in the field of view, where the three first scanning areas may be long strip areas in a horizontal direction in the 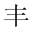 -shaped pattern, and the one second scanning area may be a long strip area in a vertical direction in the 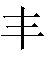 -shaped pattern.

For another example, when the quantity of first scanning areas is one and the quantity of second scanning areas is three, a 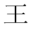 -shaped pattern may be formed in the field of view, where the one first scanning area may be a long strip area in a vertical direction in the 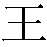 -shaped pattern, and three second scanning areas may be long strip areas in a horizontal direction in the 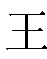 -shaped pattern.

For another example, when the quantity of first scanning areas is two and the quantity of second scanning areas is one, a 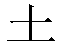 -shaped pattern may be formed in the field of view, where the two first scanning areas may be long strip areas in a horizontal direction in the 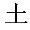 -shaped pattern, and the one second scanning area may be a long strip area in a vertical direction in the 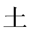 -shaped pattern.

For another example, when the quantity of first scanning areas is one and the quantity of second scanning areas is two, a T-shaped pattern may be formed in the field of view, where the one first scanning area may be a long strip area in a vertical direction in the T-shaped pattern, and two second scanning areas may be long strip areas in a horizontal direction in the T-shaped pattern.

For another example, when the quantity of first scanning areas is six and the quantity of second scanning areas is two, a BE-shaped pattern may be formed in the field of view, where three first scanning areas may be long strip areas in a left horizontal direction in the BE-shaped pattern, and the other three first scanning areas may be long strip areas in a right horizontal direction in the BE-shaped pattern, the two second scanning areas may be long strip areas in a vertical direction in the 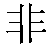 -shaped pattern.

For another example, when the quantity of first scanning areas is three and the quantity of second scanning areas is three, a 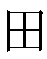 -shaped pattern may be formed in the field of view, where the three first scanning areas may be long strip areas in a horizontal direction in the 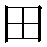 -shaped pattern, and the three second scanning areas may be long strip areas in a vertical direction in the 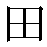 -shaped pattern.

For another example, when the quantity of first scanning areas is four and the quantity of second scanning areas is two, a 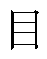 -shaped pattern may be formed in the field of view, where the four first scanning areas may be long strip areas in a horizontal direction in the 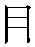 -shaped pattern, and the two second scanning areas may be long strip areas in a vertical direction in the B -shaped pattern.

For another example, when the quantity of first scanning areas is three and the quantity of second scanning areas is two, a 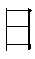 -shaped pattern may be formed in the field of view, where the three first scanning areas may be long strip areas in a horizontal direction in the 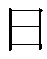 -shaped pattern, and the two second scanning areas may be long strip areas in a vertical direction in the 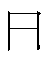 -shaped pattern. Further, based on the 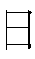 -shaped pattern, the quantity of first scanning areas and the quantity of second scanning areas are increased, and a 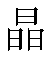 -shaped pattern may be further extended.

For another example, when the quantity of first scanning areas is two and the quantity of second scanning areas is two, a 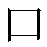 -shaped pattern may be formed in the field of view, where the two first scanning areas may be long strip areas in a horizontal direction in the 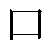 -shaped pattern, and the two second scanning areas may be long strip areas in a vertical direction in the 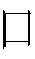 -shaped pattern. Further, based on the 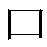 -shaped pattern, the quantity of first scanning areas and the quantity of second scanning areas are increased, and a 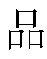 -shaped pattern may be further extended.

According to the foregoing method, in embodiments of this application, the quantity of first scanning areas and the quantity of second scanning areas are increased, so that more diversified scanning patterns are provided, and a presentation manner is more novel and vivid. In a possible implementation, the scanning area further includes a third scanning area and a fourth scanning area, the third scanning area and the fourth scanning area overlap in the field of view, and a resolution of the third scanning area is greater than a resolution of the fourth scanning area.

According to the foregoing method, in embodiments of this application, another scanning area may be further added, for example, the third scanning area and the fourth scanning area are added, so that the third scanning area and the fourth scanning area overlap and have different resolutions. Based on the first scanning area and the second scanning area, a layout manner of a region of interest in a full field of view are more enriched, and freedom of design and regulation for the region of interest is effectively improved. In addition, in embodiments of this application, resolutions of the scanning areas are different, and a system resource can be better adaptively allocated, to continuously focus on a specific target and mainly detect the specific target, and improve resource utilization.

In a possible implementation, a vertical field of view of the third scanning area overlaps a vertical field of view of the fourth scanning area.

For example, in the field of view, heights of the third scanning area and the fourth scanning area are the same, but widths of the third scanning area and the fourth scanning area are different; or heights of the third scanning area and the fourth scanning area are different, widths of the third scanning area and the fourth scanning area are different; or heights of the third scanning area and the fourth scanning area are different, but widths of the third scanning area and the fourth scanning area are the same.

In this implementation, based on a case in which the field of view includes the first scanning area and the first scanning area, when the field of view further includes the third scanning area and the fourth scanning area, and the vertical field of view of the third scanning area overlaps the vertical field of view of the fourth scanning area, the following pattern may be formed in the field of view.

In the field of view, the first scanning area and the second scanning area form a first 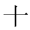 -shaped pattern, and the third scanning area and the fourth scanning area form a second 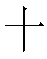 -shaped pattern.

In a possible implementation, the third scanning area may overlap the first scanning area or the second scanning area; and/or the fourth scanning area may overlap the first scanning area or the second scanning area.

In a possible implementation, the scanning area is determined based on obtained collected data about an environment.

In this implementation, the lidar may determine the scanning area based on the obtained collected data about the environment; or another apparatus may determine the scanning area based on the obtained collected data about the environment, and then notify the lidar of the scanning area. This is not limited herein.

In a possible implementation, the first scanning area and the second scanning area overlap in the field of view. The first scanning area and the second scanning area may be regulated, by controlling a relationship between a scanning speed of a fast axis and a scanning speed of a slow axis in a scanner, a quantity of light sources initially transmitted by a transmitter, and a value of a pointing angle, to overlap in the field of view.

According to the foregoing method, embodiments of this application provide a manner of controlling the first scanning area and the second scanning area to overlap in the field of view. For example, the first scanning area and the second scanning area may be regulated, by controlling the relationship between the scanning speed of the fast axis and the scanning speed of the slow axis in the scanner, the quantity of light sources initially transmitted by the transmitter, and the value of the pointing angle, to overlap in the field of view.

It should be noted that a manner of regulating the first scanning area and the second scanning area to overlap in the field of view is not limited in embodiments of this application. The foregoing content is only an example in embodiments of this application, and does not constitute a limitation on embodiments of this application.

In a possible implementation, that the resolution of the first scanning area is greater than the resolution of the second scanning area includes: regulating the resolution of the first scanning area to be greater than the resolution of the second scanning area by controlling turning-on and turning-off of the transmitter and/or controlling a point frequency change of the transmitter.

According to the foregoing method, embodiments of this application provides a manner of regulating the resolution of the first scanning area to be greater than the resolution of the second scanning area. For example, the resolution of the first scanning area may be regulated to be greater than the resolution of the second scanning area by controlling turning-on and turning-off of the transmitter and/or controlling the point frequency change of the transmitter.

In a possible implementation, when a quantity of third scanning areas is H, and a quantity of fourth scanning areas is W, vertical fields of view of one or more of the H third scanning areas overlap vertical fields of view of one or more of the W fourth scanning areas, where H and W are positive integers.

In this implementation, in embodiments of this application, the quantity of third scanning areas and the quantity of fourth scanning areas are increased, so that more diversified scanning patterns are provided.

For example, when the quantity of first scanning areas is two, the quantity of second scanning areas is two, the quantity of third scanning areas is three, and the quantity of fourth scanning areas is one, a 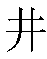 -shaped pattern and a 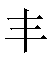 -shaped pattern may be formed in the field of view, where the two first scanning areas may be long strip areas in a vertical direction in the 4-shaped pattern, the two second scanning areas may be long strip areas in a horizontal direction in the 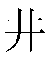 -shaped pattern, the three third scanning areas may be long strip areas in a horizontal direction in the 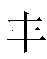 -shaped pattern, and the one fourth scanning area may be a long strip area in a vertical direction in the 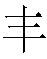 -shaped pattern.

For another example, when the quantity of first scanning areas is three, the quantity of second scanning areas is one, the quantity of third scanning areas is one, and the quantity of fourth scanning areas is three, a -shaped pattern and a 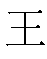 -shaped pattern may be formed in the field of view, where the three first scanning areas may be long strip areas in a horizontal direction in the 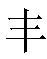 -shaped pattern, one second scanning area may be a long strip area in a vertical direction in the 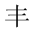 -shaped pattern, one third scanning area may be a long strip area in a vertical direction in the 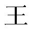 -shaped pattern, and three fourth scanning areas may be long strip areas in a horizontal direction in the 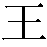 -shaped pattern.

For another example, when the quantity of first scanning areas is two, the quantity of second scanning areas is one, the quantity of third scanning areas is one, and the quantity of fourth scanning areas is two, a 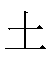 -shaped pattern and a 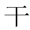 -shaped pattern may be formed in the field of view, where the two first scanning areas may be long strip areas in a horizontal direction in the 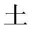 -shaped pattern, one second scanning area may be a long strip area in a vertical direction in the 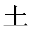 -shaped pattern, one third scanning area may be a long strip area in a vertical direction in the 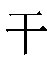 -shaped pattern, and two fourth scanning areas may be long strip areas in a horizontal direction in the 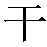 -shaped pattern.

For another example, when the quantity of first scanning areas is six, the quantity of second scanning areas is two, the quantity of third scanning areas is three, and the quantity of fourth scanning areas is three, a 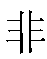 -shaped pattern and a 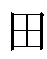 -shaped pattern may be formed in the field of view, where the three first scanning areas may be long strip areas in a left horizontal direction in the 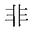 -shaped pattern, the other three first scanning areas may be long strip areas in a right horizontal direction in the 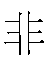 -shaped pattern, the two second scanning areas may be long strip areas in a vertical direction in the 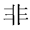 -shaped pattern, the three third scanning areas may be long strip areas in a horizontal direction in the 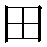 -shaped pattern, and the three fourth scanning areas may be long strip areas in a vertical direction in the 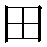 -shaped pattern.

For another example, when the quantity of first scanning areas is four, the quantity of second scanning areas is two, the quantity of third scanning areas is three, and the quantity of fourth scanning areas is two, a 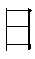 -shaped pattern and a 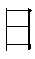 -shaped pattern may be formed in the field of view, where the four first scanning areas may be long strip areas in a horizontal direction in the 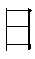 -shaped pattern, the two second scanning areas may be long strip areas in a vertical direction in the 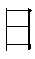 -shaped pattern, the three third scanning areas may be long strip areas in a horizontal direction in the 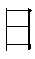 -shaped pattern, and the two third scanning areas may be long strip areas in a vertical direction in the 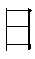 -shaped pattern.

According to the foregoing method, in embodiments of this application, the quantity of third scanning areas and the quantity of fourth scanning areas are increased, more diversified scanning patterns are provided, and a presentation manner is more novel and vivid.

According to a second aspect, this application provides a scanning apparatus, where the apparatus is configured to implement the first aspect or any method in the first aspect; and includes corresponding functional modules or units, which are respectively configured to implement the steps in the method in the first aspect. Functions may be implemented by hardware, or may be implemented by hardware executing corresponding software. The hardware or the software includes one or more modules or units corresponding to the foregoing functions.

In a possible implementation, the apparatus includes at least one determining unit and a scanning unit, where
the determining unit is configured to determine a scanning area, where the scanning area is a first region of interest, the scanning area includes a first scanning area and a second scanning area, the first scanning area and the second scanning area overlap in a field of view, and a resolution of the first scanning area is greater than a resolution of the second scanning area; and
the scanning unit is configured to scan the scanning area.

In a possible implementation, a vertical field of view of the first scanning area overlaps a vertical field of view of the second scanning area.

In a possible implementation, a vertical start position of the first scanning area is different from a vertical start position of the second scanning area.

In a possible implementation, the second scanning area is in a horizontal long strip shape in the field of view; or the first scanning area is in a horizontal long strip shape in the field of view, and the second scanning area is in a vertical long strip shape in the field of view.

In a possible implementation, vertical fields of view of one or more of M first scanning areas overlap vertical fields of view of one or more of N second scanning areas, where M and N are positive integers.

In a possible implementation, the scanning area further includes a third scanning area and a fourth scanning area, the third scanning area and the fourth scanning area overlap in the field of view, and a resolution of the third scanning area is greater than a resolution of the fourth scanning area.

In a possible implementation, a vertical field of view of the third scanning area overlaps a vertical field of view of the fourth scanning area.

In a possible implementation, the determining unit is specifically configured to determine the scanning area based on obtained collected data about an environment.

In a possible implementation, the scanning unit is specifically configured to regulate, by controlling a relationship between a scanning speed of a fast axis and a scanning speed of a slow axis in a scanner, a quantity of light sources initially transmitted by a transmitter, and a value of a pointing angle, the first scanning area and the second scanning area to overlap in the field of view.

In a possible implementation, the scanning unit is specifically configured to regulate the resolution of the first scanning area to be greater than the resolution of the second scanning area by controlling turning-on and turning-off of the transmitter and/or controlling a point frequency change of the transmitter.

According to a third aspect, a scanning apparatus is provided, where the apparatus includes a processor and a memory. The memory is configured to store a computer program or instructions, and the processor is coupled to the memory. When the processor executes the computer program or the instructions, the apparatus is enabled to perform the method according to the first aspect or any method in the first aspect. The scanning apparatus may be a lidar, or an apparatus that can support the lidar in implementing a function required in the method provided in the first aspect, for example, a chip system. For example, the scanning apparatus may be a lidar, a terminal device carrying the lidar, or some assemblies (such as a chip) in the lidar. The terminal device may be, for example, an intelligent mobile terminal, a smart home device, a smart car, or an intelligent wearable device.

According to a fourth aspect, this application provides a lidar, including a transmit light source, a scanner, and an optical system, where
the transmit light source is configured to transmit a laser pulse;
the scanner is configured to determine a scanning area, where the scanning area is a first region of interest, the scanning area includes a first scanning area and a second scanning area, the first scanning area and the second scanning area overlap in a field of view, and a resolution of the first scanning area is greater than a resolution of the second scanning area; and scan the scanning area; and
the optical system is configured to meet a case that an echo signal of the transmit light source can be received, identified, processed, and output in a corresponding area of the scanner.

According to a fifth aspect, this application provides a lidar, where the lidar includes modules/units for performing the method according to any one of the first aspect or the possible implementations of the first aspect. These modules/units may be implemented by hardware, or may be implemented by hardware executing corresponding software.

According to a sixth aspect, a terminal is provided. The terminal may include the apparatus according to any one of the second aspect to the fifth aspect. Optionally, the apparatus may be an intelligent communication device, a smart home device, an intelligent manufacturing device, an intelligent transportation device, or the like, for example, a vehicle, an unmanned aerial vehicle, an unmanned transport vehicle, or a robot.

According to a seventh aspect, this application provides a chip. The chip is connected to a memory, and is configured to read and execute a computer program or instructions stored in the memory, to implement the method according to any one of the first aspect or the possible implementations of the first aspect.

According to an eighth aspect, a computer-readable storage medium is provided. The computer-readable storage medium stores a computer program or instructions. When the computer program or the instructions is/are executed by an apparatus, the apparatus is enabled to perform the method according to any one of the first aspect or the possible implementations of the first aspect.

According to a ninth aspect, this application provides a computer program product. The computer program product includes a computer program or instructions. When the computer program or the instructions is/are executed by an apparatus, the apparatus is enabled to perform the method according to any one of the first aspect or the possible implementations of the first aspect.

### BRIEF DESCRIPTION OF DRAWINGS

FIG. 1 is a diagram of an application scenario of a lidar according to this application;
FIG. 2 is a diagram of a structure of a lidar according to this application;
FIG. 3 is a schematic flowchart of a scanning method according to this application;
FIG. 4 is a diagram of a scenario type of a region of interest according to this application;
FIG. 5 is a diagram of resolutions of different areas according to this application;
FIG. 6 is a diagram of a first field of view scanning area pattern according to this application;
FIG. 7 is a diagram of a second field of view scanning area pattern according to this application;
FIG. 8 is a diagram of a third field of view scanning area pattern according to this application;
FIG. 9 is a diagram of a fourth field of view scanning area pattern according to this application;
FIG. 10 is a diagram of a fifth field of view scanning area pattern according to this application;
FIG. 11 is a diagram of a sixth field of view scanning area pattern according to this application;
FIG. 12 is a diagram of a seventh field of view scanning area pattern according to this application;
FIG. 13 is a diagram of a first field of view scanning area pattern according to this application;
FIG. 14 is a diagram of a second field of view scanning area pattern according to this application;
FIG. 15 is a diagram of a third field of view scanning area pattern according to this application;
FIG. 16 is a diagram of a fourth field of view scanning area pattern according to this application;
FIG. 17 is a diagram of a fifth field of view scanning area pattern according to this application;
FIG. 18 is a diagram of a sixth field of view scanning area pattern according to this application;
FIG. 19 is a diagram of a seventh field of view scanning area pattern according to this application;
FIG. 20 is a diagram of an eighth field of view scanning area pattern according to this application;
FIG. 21 is a diagram of a ninth field of view scanning area pattern according to this application;
FIG. 22 is a diagram of a tenth field of view scanning area pattern according to this application;
FIG. 23 is a diagram of an eleventh field of view scanning area pattern according to this application;
FIG. 24 is a diagram of a twelfth field of view scanning area pattern according to this application;
FIG. 25 is a diagram of a thirteenth field of view scanning area pattern according to this application;
FIG. 26 is a diagram of a fourteenth field of view scanning area pattern according to this application;
FIG. 27 is a diagram of a fifteenth field of view scanning area pattern according to this application;
FIG. 28 is a diagram of a sixteenth field of view scanning area pattern according to this application;
FIG. 29 is a diagram of a seventeenth field of view scanning area pattern according to this application;
FIG. 30 is a diagram of an eighteenth field of view scanning area pattern according to this application;
FIG. 31 is a diagram of a scanning scenario according to this application; and
FIG. 32 is a diagram of a structure of a control apparatus according to this application.

### DESCRIPTION OF EMBODIMENTS

The following describes some terms in embodiments of this application, to facilitate understanding of a person skilled in the art.
1. Region of interest (region of interest, ROI): The ROI is an area that is in a full field of view and that is more interesting or more focused on than content in another area. The ROI in embodiments of this application may be used as a focus area in a lidar recognition processing process.

Further, in embodiments of this application, there may be at least two ROIs in a full field of view area, and resolutions of different ROIs may be different.

It may be understood that, in embodiments of this application, an ROI with a high resolution is more interesting to a user than an ROI with a low resolution.

The region of interest in embodiments of this application may be an area determined in a manner, for example, a block, a circle, an ellipse, or another regular or irregular pattern. This is not limited herein. For ease of description, in the following embodiment, the region of interest determined in a block manner is described as an example.

2. Full field of view: The full field of view can be understood as a field of view range that can be detected by a lidar in a scanning cycle.

For example, in embodiments of this application, the field of view range may be described through a horizontal field of view and a vertical field of view. For example, a current field of view range of a full field of view is a horizontal field of view 100°*a vertical field of view 40.

Further, in embodiments of this application, when information collection is performed in the full field of view based on the full field of view range, a scanning module in the lidar may be used to perform scanning in a horizontal dimension and a vertical dimension, to implement point cloud collection, and obtain a point cloud 1 in the horizontal dimension and a point cloud 2 in the vertical dimension.

Then, a processing module in the lidar synthesizes the point cloud 1 collected in the horizontal dimension and the point cloud 2 collected in the vertical dimension, to obtain a final output result.

Optionally, in embodiments of this application, the lidar may perform scanning from left to right in the horizontal dimension, and perform scanning from top to bottom in the vertical dimension. A specific scanning manner of the lidar is not limited in this application.

3. Fast axis: In embodiments of this application, an axial direction with a high scanning speed may be referred to as the fast axis.

For example, it is assumed that the fast axis in embodiments of this application is perpendicular to an axial direction of a light source. A manner of scanning performed in the fast axis may be scanning from bottom to top in a vertical dimension.

In embodiments of this application, freedom of design of variable-speed scanning in the fast axis direction is high, and is related to a system requirement.

4. Slow axis: In embodiments of this application, an axial direction with a slow scanning speed may be referred to as the slow axis.

For example, it is assumed that the slow axis in embodiments of this application is parallel to an axial direction of a light source. A manner of scanning performed in the slow axis may be scanning from left to right in a horizontal dimension.

Further, in embodiments of this application, when scanning is performed in the slow axis, a scanning speed of the scanner may be controlled.

For example, when the scanner performs scanning in the slow axis direction, a scanning speed may be controlled to change rapidly at several moments in a frame and then move at a uniform speed in a subsequent period of time. In this way, a plurality of areas with different uniform speeds are formed in a vertical direction.

When scanning is performed in the slow axis, uniform acceleration and deceleration, variable acceleration motion, and the like are related to a system design.

It should be noted that the terms "apparatus" and "device" in embodiments of this application may be used interchangeably. In descriptions of embodiments of this application, the term "and/or" describes an association relationship between associated objects and indicates that three relationships may exist. For example, A and/or B may indicate the following three cases: Only A exists, both A and B exist, and only B exists. The character "/" usually indicates an "or" relationship between the associated objects.

In this application, "at least one" means one or more, and "a plurality of" means two or more. In addition, it should be understood that, in the description of this application, the terms "first", "second", and "third" are only intended for distinguishing a purpose of description and shall not to be understood as indication or implication of relative importance, or indication or implication of order.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized in another manner.

The foregoing describes some terms used in this application. The following describes technical features and possible application scenarios used in this application. It should be noted that these explanations are for ease of understanding by a person skilled in the art, and are not intended to limit the protection scope claimed by this application.

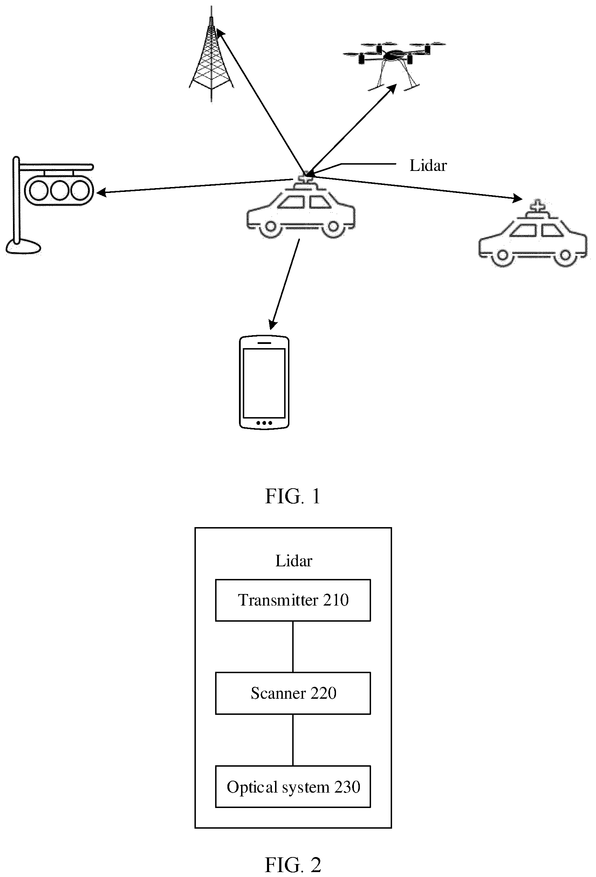

As shown in FIG. 1, in an optional application scenario of this application, a lidar may be mounted on a mobile device. For example, in this application, when the lidar is used in an autonomous driving scenario, or may be used in a networked vehicle scenario or the like, the lidar may be mounted on a vehicle and used as a vehicle-mounted lidar. For another example, the lidar may be mounted on a flight vehicle and used as an airborne lidar.

In an optional application scenario of this application, the lidar may be further mounted on a mobile platform, for example, a satellite. In this case, the lidar needs assistance of another apparatus in the mobile platform to determine a current position and steering information of the lidar. This can ensure availability of measurement data.

In an optional application scenario of this application, the lidar may also be mounted on a fixed platform. For example, the lidar may be mounted on a road side unit (road side unit, RSU), a roof, a base station, or the like. In a scenario in which the lidar is mounted on the fixed platform, the lidar needs assistance of another apparatus on the fixed platform to determine a current position and steering information of the lidar. This can ensure availability of measurement data.

In addition, the lidar in this application may be further used in another possible scenario. This is not limited herein.

Based on the foregoing content, FIG. 2 is a diagram of a structure of an example of a lidar according to this application.

The lidar includes a transmitter 210, a scanner 220, and an optical system 230.

The transmitter 210 is configured to transmit a light source signal to the outside.

The light source signal is reflected back after reaching a detected target (also referred to as a target object).

Optionally, a transmit light source in this embodiment of this application may be a solid-state laser, a semiconductor laser, a fiber laser, or the like.

Optionally, wavelength distribution of the transmit light source in this embodiment of this application covers 850 nm to 1550 nm.

The scanner 220 is configured to perform a scanning process.

In this embodiment of this application, the scanner performs scanning to obtain a scanning area. The scanning area is a part of an area in a full field of view range. For example, the scanning area is an area focused on by a region of interest.

It may be understood that in this embodiment of this application, when the scanner performs scanning, scanning is performed in the full field of view range. This application focuses on how to scan the region of interest in the full field of view range and what a pattern of the obtained scanning area is. Another area in the full field of view range is not limited herein.

The optical system 230 is configured to meet a case that an echo signal of the transmit light source can be received, identified, processed, and output in a corresponding area of the scanner.

The lidar in this embodiment of this application may further include another device. For example, the lidar may further include a processor. The processor may be configured to determine a scanning manner, to indicate the scanner to perform scanning in the scanning manner, to obtain the scanning area. Alternatively, the processor outside the lidar determines the scanning area, and notifies the lidar of the scanning area, and the lidar scans the scanning area.

During daily driving, a radar system often needs to focus on different areas at different moments, to form one or more ROIs, and effectively detect, identify, and classify various complex road conditions through the ROIs.

For example, when a vehicle is driving on a highway, attention needs to be paid to a distant dynamic vehicle and a small static obstacle. For example, when the vehicle passes through a street intersection, a nearby pedestrian and a two-wheeled vehicle are guarded against. For another example, when the vehicle passes through a congested road section, a nearby vehicle is guarded against forcible blocking.

However, a current ROI scanning manner usually has the following problems: Freedom and flexibility of regulation are insufficient; an actual point cloud resolution is limited by an engineering error and coupling efficiency; and same-weight attention strategies are used for targets in a full field of view, and consequently resources of similar proportions are consumed for collecting important information and unimportant information, and true adaptive ROI adjustment cannot be implemented.

In view of this, embodiments of this application provide a scanning method. In the method, in this embodiment of this application, at least two regions of interest are determined, so that the at least two regions of interest overlap in a field of view and have different resolutions. This enriches layout manners of the regions of interest in a full field of view, effectively improves freedom of design and regulation for the regions of interest, and enables self-adaptive allocation of system resources for replacement, implements continuous attention and focus detection on a specific target, and improves resource utilization.

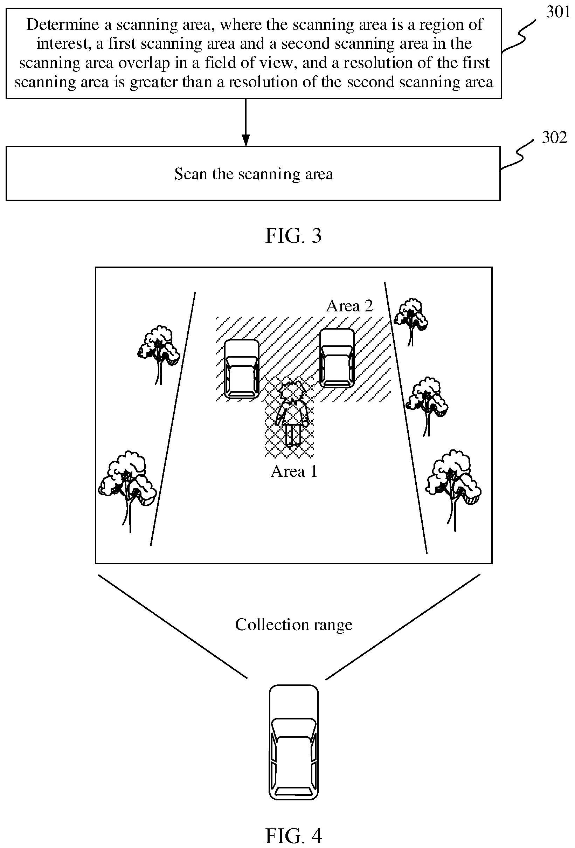

Based on the foregoing content, FIG. 3 is a schematic flowchart of a scanning method according to this application. The method may be performed by a lidar, and the method includes the following steps.

Step 301: A lidar determines a scanning area, where the scanning area is a region of interest, the scanning area includes a first scanning area and a second scanning area, the first scanning area and the second scanning area overlap in a field of view, and a resolution of the first scanning area is greater than a resolution of the second scanning area.

It should be noted that, in this embodiment of this application, the scanning area may be determined by the lidar. Alternatively, in this embodiment of this application, the scanning area may be determined by another apparatus, and then notified to the lidar.

Based on S301, the full field of view may be divided into at least three areas such as the first scanning area (which may be referred to as a first region of interest), the second scanning area (which may be referred to as a second region of interest), and a remaining area in the full field of view (which may be referred to as a non-region of interest).

Step 302: The lidar scans the scanning area.

Step 302 may be understood as that the lidar forms, in the field of view based on the determined scanning area, at least two overlapping scanning areas with different resolutions. Alternatively, step 302 may be understood as that the lidar scans the scanning area, to form the first scanning area and the second scanning area in the field of view, where the first scanning area and the second scanning area overlap in the field of view, and the resolution of the first scanning area is greater than the resolution of the second scanning area.

According to the foregoing solution, the region of interest is divided into at least the first scanning area and the second scanning area, and the first scanning area and the second scanning area are set with different resolutions. In this way, in an actual detection process, resolutions of corresponding scanning areas may be set based on different resolution requirements, and flexible regulation can be performed, so that requirements of the detection apparatus for different resolutions can be met, system resources can be better adaptively allocated, and continuous attention and focus detection on a specific target are implemented. This improves resource utilization. For example, the first scanning area and the second scanning area with different resolutions are set, so that in a full field of view range, resolutions of some fields of view are high, and resolutions of some fields of view are low. In addition, a position relationship, an area size, an overlapping size, and the like of the first scanning area and the second scanning area may be adjusted, so that a layout manner of the regions of interest in the full field of view can be effectively enriched, various scanning patterns may be generated based on an actual detection requirement, and adaptability and freedom are higher.

Further, in this embodiment of this application, the processing apparatus in the lidar may determine resolution requirements of different areas in the scanning area based on a current application scenario, so that the scanning apparatus in the lidar scans the scanning area in different scanning manners based on different resolution requirements.

A scanning manner of the scanning area may include one or more of the following.

### Scanning manner 1: Types of regions of interest included in the scanning area and quantities respectively corresponding to different types of regions of interest

In an example, the type of the region of interest described in embodiments of this application is related to an actually identified target, and different targets correspond to different types of regions of interest. Resolutions of the regions of interest of a same type are the same, and resolutions of the regions of interest of different types are different. The type of the region of interest is irrelevant to a size and a position of the region of interest.

For example, as shown in FIG. 4, in a driving process of a vehicle, when a front road condition is detected and identified by the lidar, both an identified area 1 in which a pedestrian is located and an identified area 2 in which a vehicle is located are regions of interest, but the two regions of interest, namely, the area 1 and the area 2 are of different types.

In this embodiment of this application, after the regions of interest are determined based on different targets, specific scanning areas of different targets may be further determined based on the regions of interest.

For example, in this embodiment of this application, an area to be subsequently identified may be first pre-determined in advance based on collected historical perception data, to better understand a target situation in a scenario to be subsequently focused on. For example, it is learned, based on the perception data, that the scenario to be focused on includes a nearby pedestrian and a distant vehicle shown in FIG. 4. Then, a type of a region of interest to be scanned subsequently is determined based on the target situation. Finally, different areas to be scanned subsequently, a scanning manner, and the like are determined based on a type of the region of interest, to obtain the scanning area in this embodiment of this application.

It should be noted that, a quantity of types of regions of interest and a specific quantity of different types are not limited herein in embodiments of this application.

### Scanning manner 2: Boundary planning of a plurality of regions of interest in the field of view

For example, the scanning manner indicates that a vertical field of view of the first scanning area included in the scanning area overlaps a vertical field of view of the second scanning area included in the scanning area, and a vertical start position of the first scanning area is different from a vertical start position of the second scanning area.

For another example, the scanning manner may further indicate a specific vertical start position of the first scanning area and a specific vertical start position of the second scanning area.

Based on the scanning manner 2, positions displayed in a plurality of regions of interest in the field of view can be determined. For example, when the field of view includes the first scanning area and the second scanning area, positions of the first scanning area and the second scanning area and an overlapping size between the first scanning area and the second scanning area may be determined. In this way, based on an actual situation, a scanning manner may be indicated by adjusting a position relationship, an area size, the overlapping size, and the like of the first scanning area and the second scanning area, so that a layout manner of the region of interest is enriched in the field of view, a variety of scanning patterns are generated, and adaptability and freedom are higher.

### Scanning manner 3: Resolution of the region of interest

For example, the scanning manner indicates that a resolution of the first scanning area included in the scanning area is higher than a resolution of the second scanning area included in the scanning area. The resolution of the region of interest in a layout strategy may be designed based on a distance of the target object that is included in collected data.

Further, in this embodiment of this application, after the scanning manner of the scanning area is determined, when the scanning area is scanned by the lidar, the lidar adjusts some parameters, so that a scanning pattern indicated by the scanning manner is presented in a full field of view that is scanned. Adaptive regulation of the region of interest may be implemented in the following several manners of parameter adjustment of the lidar.

Parameter adjustment 1: The lidar controls a relationship between a scanning speed of a fast axis and a scanning speed of a slow axis to regulate the region of interest.

For example, in this embodiment of this application, the lidar may control a scanning speed in the slow axis direction. For example, the lidar controls the slow axis to move quickly at several moments in a frame and move at a uniform speed at other moments, to form a plurality of scanning areas with different uniform speeds in a vertical direction in the full field of view.

It may be understood that a speed change design of the slow axis in embodiments of this application, for example, controlling the slow axis to implement uniform acceleration and deceleration, variable acceleration motion, and the like is related to the layout strategy.

Parameter adjustment 2: The lidar controls a quantity of light sources initially transmitted by the transmit light source and a value of a pointing angle to regulate the region of interest.

For example, in this embodiment of this application, the lidar may control the value of the pointing angle. For example, the lidar controls a vertical field of view of the first scanning area to be the same as that of the second scanning area, to present, in the full field of view, a scanning pattern in which the first scanning area and the second scanning area overlap.

Parameter adjustment 3: The lidar controls a repetition frequency of a transmitter to regulate the region of interest. The repetition frequency of the transmitter determines a point cloud density in a unit of time and in a unit of a square degree.

In embodiments of this application, there are a plurality of manners in which the lidar implements point cloud density modulation through a repetition frequency design, and the manners are not specifically limited to the following several manners.

Design manner 1: When a frame of point cloud is formed, the lidar may increase or decrease the density of the point cloud by controlling a point frequency change of the transmitter.

Design manner 2: The lidar may design a transmit mode of the transmitter as a burst (burst) mode, to increase the density of the point cloud.

For example, the lidar continuously transmits a pulse train via the transmitter, where a time interval between pulses is regulated. For example, the time interval between the pulses may be designed in a chirp manner, to increase the density of the point cloud for spatial transmit. In this case, one transmission corresponds to a plurality of receptions, and each pulse is aligned with start time of time of flight (Time of Flight, ToF) for one reception.

Design manner 3: The lidar controls the transmitter to be temporarily turned off in some time periods and to be turned on in other time periods, to increase or decrease the density of the point cloud. The process may be reproduced for a plurality of times in one frame.

It should be noted that the foregoing three manners may be synchronous or asynchronous with each other in start time, and finally implement boundaries of different resolutions (distance measurement capabilities) to form corresponding regions of interest.

For example, when the resolution of the region of interest is regulated by controlling the lighting time sequence, the lidar may implement different topological forms of the spatial point cloud by regulating a delay relationship between time when the transmit light source starts to emit light in one row (column) or a plurality of rows (column) adjacent to the transmit light source.

Different topology forms in this embodiment of this application may also be used to define different regions of interest, and a point cloud topology form that can be designed is related to a resolution.

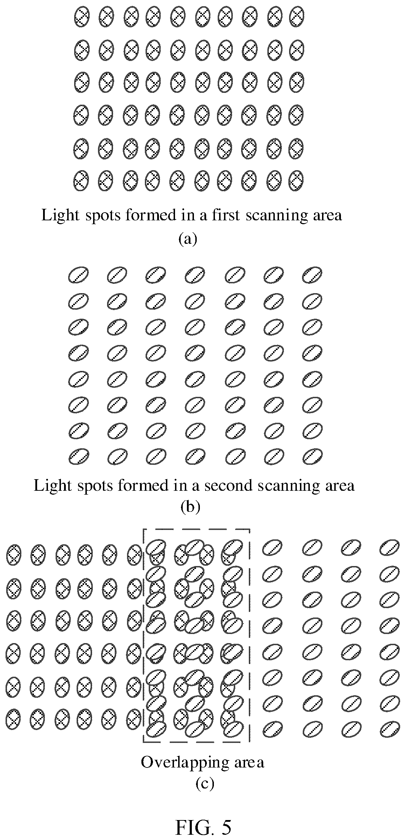

For example, (a) in FIG. 5 shows a first scanning area in a full field of view in this embodiment of this application, (b) in FIG. 5 shows a second scanning area in this embodiment of this application, and (c) in FIG. 5 shows an overlapping area between the first scanning area and the second scanning area in this embodiment of this application.

An ellipse in each scanning area indicates a light spot formed when an optical signal transmitted by a transmit module is emitted into a detection area. Because a light spot topology form formed in the first scanning area is different from that formed in the second scanning area, a resolution of the first scanning area is also different from a resolution of the second scanning area.

In addition, it may be understood that, a resolution of the overlapping portion shown in (c) in FIG. 5 is equal to a sum of the resolution corresponding to the first scanning area and the resolution corresponding to the second scanning area, and the resolution of the overlapping portion is higher than the resolution of the first scanning area and is also higher than the resolution corresponding to the second scanning area.

It should be noted that a shape of the light spot in an area corresponding to a scanning field of view may be another possible shape, for example, a circle or another possible irregular pattern. Content shown in FIG. 5 is shown by using an ellipse as an example. In addition, an example in which the area corresponding to the scanning field of view is a rectangle is used. A shape of the area corresponding to the scanning field of view is not limited in this application. For example, the area may be a square, or another regular or irregular shape.

It should be noted that the foregoing parameter adjustment solution is only used as an example for description, and does not constitute a limitation on embodiments of this application. In this embodiment of this application, when one region of interest is regulated, one of the foregoing parameter adjustment solutions may be selected to regulate the region of interest, or a plurality of the foregoing parameter adjustment solutions may be selected to regulate the region of interest in a combination manner.

To better describe the scanning method provided in this application, the following lists, based on the method shown in FIG. 3, several patterns of a scanning area in the full field of view that can be implemented in this embodiment of this application. This is not specifically limited to the following several scenarios.

Scenario 1: The scanning area in this embodiment of this application includes one first scanning area and one second scanning area, and a specifically formed scanning pattern is not limited to the following several patterns.

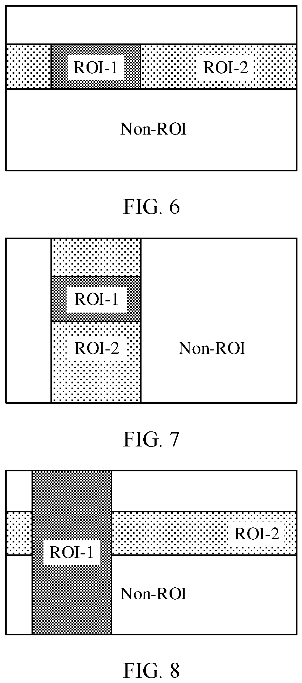

Pattern 1: A full field of view shown in FIG. 6 is obtained by performing scanning in one scanning cycle. The full field of view includes three areas: an ROI-1, an ROI-2, and a non-ROI. In an example, positions of the ROI-1 and the ROI-2 displayed in the field of view are scanning areas formed in this embodiment of this application.

A vertical field of view of the ROI-1 is the same as a vertical field of view of the ROI-2, a vertical start position of the ROI-1 is different from a vertical start position of the ROI-2, the vertical start position of the ROI-2 includes the vertical start position of the ROI-1, a resolution of the ROI-1 is higher than a resolution of the ROI-2, and the resolution of the ROI-2 is higher than a resolution of the non-ROI.

In a scanning process, scanning may be first performed in a scanning manner corresponding to the ROI-1 to obtain a scanning pattern of the ROI-1, and then scanning is performed in a scanning manner corresponding to the ROI-2 to obtain a scanning area of the ROI-2.

For example, assuming that the resolution of the ROI-1 is 200, and the resolution of the ROI-2 is 300, after the scanning area of the ROI-1 is obtained, scanning and superposition with a resolution of 100 may be performed again on the scanning area of the ROI-1 based on a position indicated in the scanning manner of the ROI-2, to obtain the scanning area of the ROI-2.

It should be noted that the foregoing scanning process of forming the scanning pattern shown in FIG. 6 is only an example, and does not constitute a limitation on embodiments of this application.

Pattern 2: A full field of view shown in FIG. 7 is obtained by performing scanning in one scanning cycle. The full field of view includes three areas: an ROI-1, an ROI-2, and a non-ROI.

In an example, positions of the ROI-1 and the ROI-2 displayed in the field of view are scanning areas formed in this embodiment of this application.

A vertical field of view of the ROI-1 is different from a vertical field of view of the ROI-2, the vertical field of view of the ROI-2 is greater than the vertical field of view of the ROI-1, a vertical start position of the ROI-1 is the same as a vertical start position of the ROI-2, a resolution of the ROI-1 is higher than a resolution of the ROI-2, and the resolution of the ROI-2 is higher than a resolution of the non-ROI.

For a scanning process of forming a scanning pattern shown in FIG. 7, refer to the foregoing description of FIG. 6. Details are not described herein again.

Pattern 3: A full field of view shown in FIG. 8 is obtained by performing scanning in one scanning cycle. The full field of view includes three areas: one ROI-1, one ROI-2, and a non-ROI.

In an example, positions of the ROI-1 and the ROI-2 displayed in the field of view are scanning areas formed in this embodiment of this application.

A vertical field of view of the ROI-1 overlaps a vertical field of view of the ROI-2, a vertical start position of the ROI-1 is different from a vertical start position of the ROI-2, the vertical start position of the ROI-2 includes the vertical start position of the ROI-1, a resolution of the ROI-1 is higher than a resolution of the ROI-2, the resolution of the ROI-2 is higher than a resolution of the non-ROI, the ROI-1 is in a vertical long strip shape in the field of view, and the ROI-2 is in a horizontal long strip shape in the field of view, that is, a 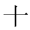 -shaped pattern may be formed in the field of view.

For a scanning process of forming a scanning pattern shown in FIG. 8, refer to the foregoing description of FIG. 6. Details are not described herein again.

Scenario 2: When the scanning area in this embodiment of this application includes one first scanning area and a plurality of second scanning areas, or when the scanning area includes a plurality of first scanning areas and one second scanning area, a specifically formed scanning pattern is not limited to the following several patterns.

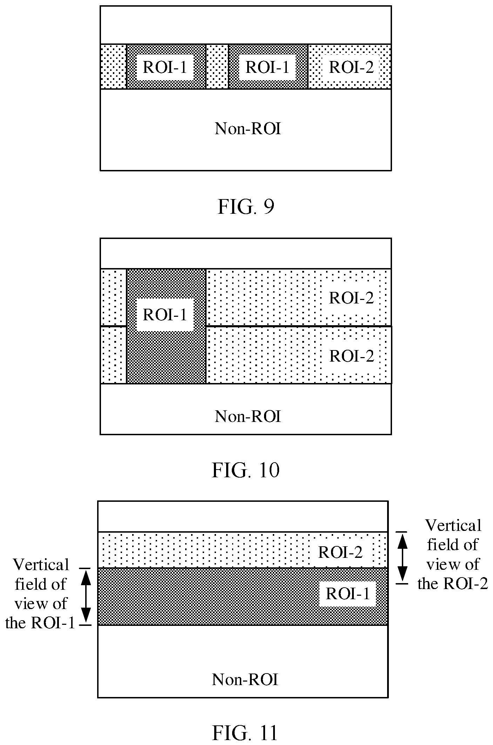

Pattern 1: A full field of view shown in FIG. 9 is obtained by performing scanning in one scanning cycle. The full field of view includes four areas: two ROI-1s, one ROI-2, and a non-ROI.

In an example, areas including the two ROI-1s and one ROI-2 are scanning areas in the full field of view.

A vertical field of view of each ROI-1 is the same as a vertical field of view of the ROI-2, a vertical start position of each ROI-1 is different from a vertical start position of the ROI-2, the vertical start position of the ROI-2 includes vertical start positions of two ROI-1s, start positions of the two ROI-1s are different, resolutions of the two ROI-1s are the same and are higher than a resolution of the ROI-2, and the resolution of the ROI-2 is higher than a resolution of the non-ROI.

For a scanning process of forming a scanning pattern shown in FIG. 9, refer to the foregoing description of FIG. 6. Details are not described herein again.

Pattern 2: A full field of view shown in FIG. 10 is obtained by performing scanning in one scanning cycle. The full field of view includes four areas: one ROI-1, two ROI-2s, and a non-ROI.

In an example, areas including the one ROI-1 and the two ROI-2s are scanning areas in the full field of view.

A vertical field of view of the ROI-1 overlaps a vertical field of view of each ROI-2, and a size of the vertical field of view of the ROI-1 is a sum of vertical fields of view of the two ROI-2s.

A vertical start position of the ROI-1 is different from a vertical start position of each ROI-2. The vertical start position of each ROI-2 includes the vertical start position of the ROI-1, a resolution of the ROI-1 is higher than a resolution of the ROI-2, the resolution of the ROI-2 is higher than a resolution of the non-ROI, the ROI-1 is in a vertical long strip shape in the field of view, and the ROI-2 is in a horizontal long strip shape in the field of view.

For a scanning process of forming a scanning pattern shown in FIG. 10, refer to the foregoing description of FIG. 6. Details are not described herein again.

Pattern 3: A full field of view shown in FIG. 11 is obtained by performing scanning in one scanning cycle. The full field of view includes three areas: one ROI-1, one ROI-2, and a non-ROI.

In an example, areas including the one ROI-1 and the one ROI-2 are scanning areas in the full field of view.

A vertical field of view of the ROI-1 overlaps a vertical field of view of the ROI-2, a vertical start position of the ROI-1 is the same as a vertical start position of the ROI-2, a resolution of the ROI-1 is higher than a resolution of the ROI-2, and the resolution of the ROI-2 is higher than a resolution of the non-ROI.

For a scanning process of forming a scanning pattern shown in FIG. 11, refer to the foregoing description of FIG. 6. Details are not described herein again.

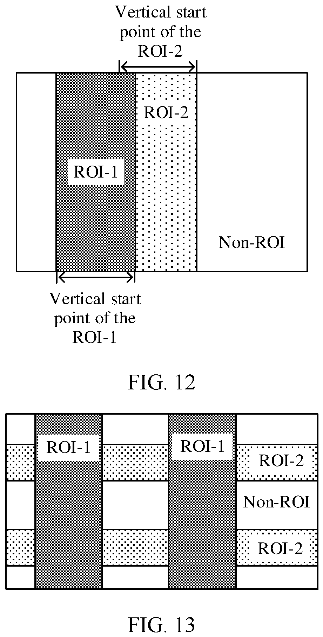

Pattern 4: A full field of view shown in FIG. 12 is obtained by performing scanning in one scanning cycle. The full field of view includes three areas: one ROI-1, one ROI-2, and a non-ROI.

In an example, areas including the one ROI-1 and the one ROI-2 are scanning areas in the full field of view.

A vertical field of view of the ROI-1 overlaps a vertical field of view of the ROI-2, and a vertical start position of the ROI-1 is different from a vertical start position of the ROI-2.

A vertical start position of the ROI-1 is less than a vertical start position of the ROI-2, a vertical end position of the ROI-1 is less than a vertical end position of the ROI-2, a resolution of the ROI-1 is higher than a resolution of the ROI-2, and the resolution of the ROI-2 is higher than a resolution of the non-ROI.

For a scanning process of forming a scanning pattern shown in FIG. 12, refer to the foregoing description of FIG. 6. Details are not described herein again.

Pattern 5: A full field of view shown in FIG. 13 is obtained by performing scanning in one scanning cycle. The full field of view includes five areas: two ROI-1s, two ROI-2s, and a non-ROI.

In an example, areas including the two ROI-1s and the two ROI-2s are scanning areas in the full field of view.

Vertical fields of view of the ROI-1s overlap vertical fields of view of the ROI-2s, and a 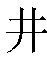 -shaped pattern is formed in the field of view.

The two ROI-1s are long strip areas in a vertical direction in the 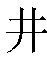 -shaped pattern, the two ROI-2s are long strip areas in a horizontal direction in the 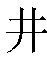 -shaped pattern, a resolution of the ROI-1 may be higher than a resolution of the ROI-2, and the resolution of the ROI-2 is higher than a resolution of the non-ROI.

Alternatively, it may be understood that, in FIG. 13, the two ROI-1s may be long strip areas in a horizontal direction in the 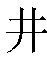 -shaped pattern, and the two ROI-2s may be long strip areas in a vertical direction in the 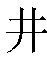 -shaped pattern.

For a scanning process of forming a scanning pattern shown in FIG. 13, refer to the foregoing description of FIG. 6. Details are not described herein again.

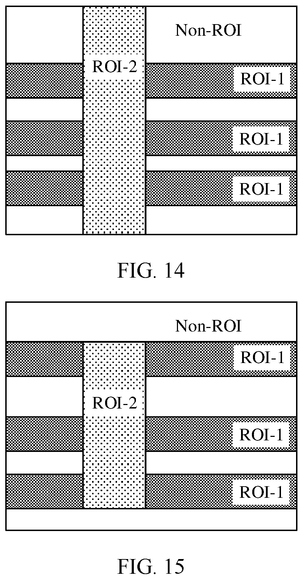

Pattern 6: A full field of view shown in FIG. 14 is obtained by performing scanning in one scanning cycle. The full field of view includes five areas: three ROI-1s, one ROI-2, and a non-ROI.

In an example, areas including the three ROI-1s and the one ROI-2 are scanning areas in the full field of view.

Vertical fields of view of the ROI-1s overlap a vertical field of view of the ROI-2, and a 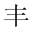 -shaped pattern is formed in the field of view.

The one ROI-2 is a long strip area in a vertical direction in the 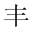 -shaped pattern, the three ROI-1s are long strip areas in a horizontal direction in the 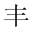 -shaped pattern, a resolution of the ROI-1 may be higher than a resolution of the ROI-2, and the resolution of the ROI-2 is higher than a resolution of the non-ROI.

For a scanning process of forming a scanning pattern shown in FIG. 14, refer to the foregoing description of FIG. 6. Details are not described herein again.

Pattern 7: A full field of view shown in FIG. 15 is obtained by performing scanning in one scanning cycle. The full field of view includes five areas: three ROI-1s, one ROI-2, and a non-ROI.

In an example, areas including the three ROI-1s and the one ROI-2 are scanning areas in the full field of view.

Vertical fields of view of the ROI-1s overlap a vertical field of view of the ROI-2, and a 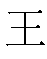 -shaped pattern is formed in the field of view.

The one ROI-2 is a long strip area in a vertical direction in the 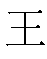 -shaped pattern, three ROI-1s are long strip areas in a horizontal direction in the 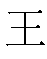 -shaped pattern, a resolution of the ROI-1 may be higher than a resolution of the ROI-2, and the resolution of the ROI-2 is higher than a resolution of the non-ROI.

For a scanning process of forming a scanning pattern shown in FIG. 15, refer to the foregoing description of FIG. 6. Details are not described herein again.

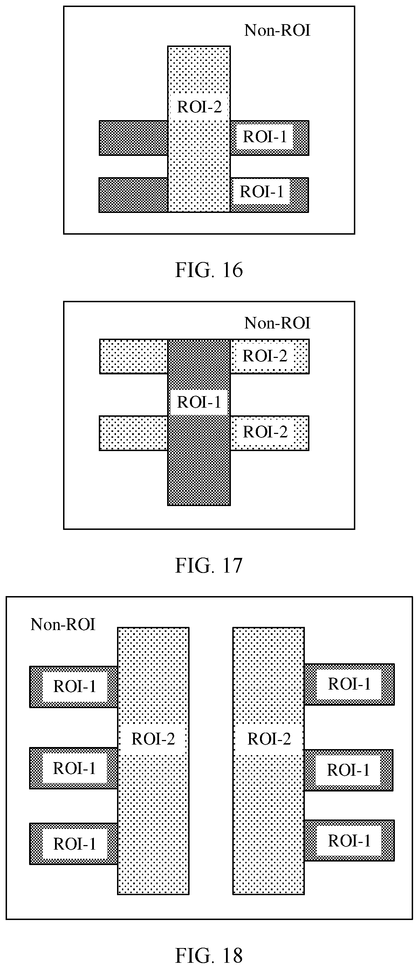

Pattern 8: A full field of view shown in FIG. 16 is obtained by performing scanning in one scanning cycle. The full field of view includes four areas: two ROI-1s, one ROI-2, and a non-ROI.

In an example, areas including the two ROI-1s and the one ROI-2 are scanning areas in the full field of view.

Vertical fields of view of the ROI-1s overlap a vertical field of view of the ROI-2, and a 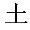 -shaped pattern is formed in the field of view.

The one ROI-2 is a long strip area in a vertical direction in the 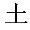 -shaped pattern, the two ROI-1s are long strip areas in a horizontal direction in the 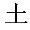 -shaped pattern, a resolution of the ROI-1 may be higher than a resolution of the ROI-2, and the resolution of the ROI-2 is higher than a resolution of the non-ROI.

For a scanning process of forming a scanning pattern shown in FIG. 16, refer to the foregoing description of FIG. 6. Details are not described herein again.

Pattern 9: A full field of view shown in FIG. 17 is obtained by performing scanning in one scanning cycle. The full field of view includes four areas: one ROI-1, two ROI-2s, and a non-ROI.

In an example, areas including the one ROI-1 and the two ROI-2s are scanning areas in the full field of view.

A vertical field of view of the ROI-1 overlaps vertical fields of view of the ROI-2s, and a 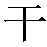 -shaped pattern is formed in the field of view.

The one ROI-1 is a long strip area in a vertical direction in the T-shaped pattern, the two ROI-2s are long strip areas in a horizontal direction in the T-shaped pattern, a resolution of the ROI-1 may be higher than a resolution of the ROI-2, and the resolution of the ROI-2 is higher than a resolution of the non-ROI.

For a scanning process of forming a scanning pattern shown in FIG. 17, refer to the foregoing description of FIG. 6. Details are not described herein again.

Pattern 10: A full field of view shown in FIG. 18 is obtained by performing scanning in one scanning cycle. The full field of view includes nine areas: six ROI-1s, two ROI-2s, and a non-ROI.

In an example, areas including the six ROI-1s and the two ROI-2s are scanning areas in the full field of view.

Vertical fields of view of the ROI-1s overlap vertical fields of view of the ROI-2s, and a T-shaped pattern is formed in the field of view.

Three ROI-1s are long strip areas in a left horizontal direction in the T-shaped pattern, the other three ROI-1s are long strip areas in a right horizontal direction in the T-shaped pattern, the two ROI-2s are long strip areas in a vertical direction in the T-shaped pattern, a resolution of the ROI-1 may be higher than a resolution of the ROI-2, and the resolution of the ROI-2 is higher than a resolution of the non-ROI.

For a scanning process of forming a scanning pattern shown in FIG. 18, refer to the foregoing description of FIG. 6. Details are not described herein again.

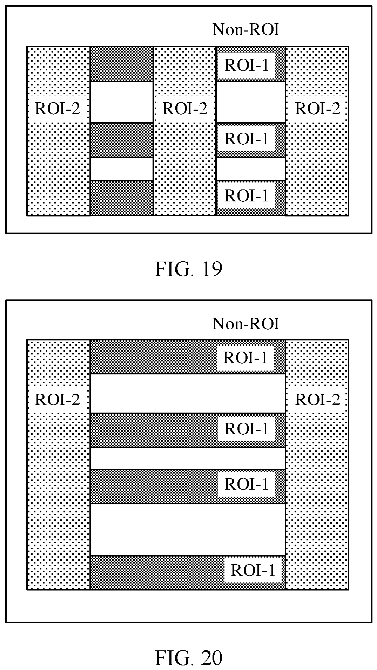

Pattern 11: A full field of view shown in FIG. 19 is obtained by performing scanning in one scanning cycle. The full field of view includes seven areas: three ROI-1s, three ROI-2s, and a non-ROI.

In an example, areas including the three ROI-1s and the three ROI-2s are scanning areas in the full field of view.

Vertical fields of view of the ROI-1s overlap vertical fields of view of the ROI-2s, and a 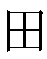 -shaped pattern is formed in the field of view.

The three ROI-1s are long strip areas in a horizontal direction in the 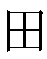 -shaped pattern, the three ROI-2s are long strip areas in a vertical direction in the 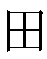 -shaped pattern, a resolution of the ROI-1 may be higher than a resolution of the ROI-2, and the resolution of the ROI-2 is higher than a resolution of the non-ROI.

For a scanning process of forming a scanning pattern shown in FIG. 19, refer to the foregoing description of FIG. 6. Details are not described herein again.

Pattern 12: A full field of view shown in FIG. 20 is obtained by performing scanning in one scanning cycle. The full field of view includes seven areas: four ROI-1s, two ROI-2s, and a non-ROI.

In an example, areas including the four ROI-1s and the two ROI-2s are scanning areas in the full field of view.

Vertical fields of view of the ROI-1s overlap vertical fields of view of the ROI-2s, and a 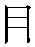 -shaped pattern is formed in the field of view.

The four ROI-1s are long strip areas in a horizontal direction in the 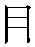 -shaped pattern, the two ROI-2s are long strip areas in a vertical direction in the 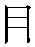 -shaped pattern, a resolution of the ROI-1 may be higher than a resolution of the ROI-2, and the resolution of the ROI-2 is higher than a resolution of the non-ROI.

For a scanning process of forming a scanning pattern shown in FIG. 20, refer to the foregoing description of FIG. 6. Details are not described herein again.

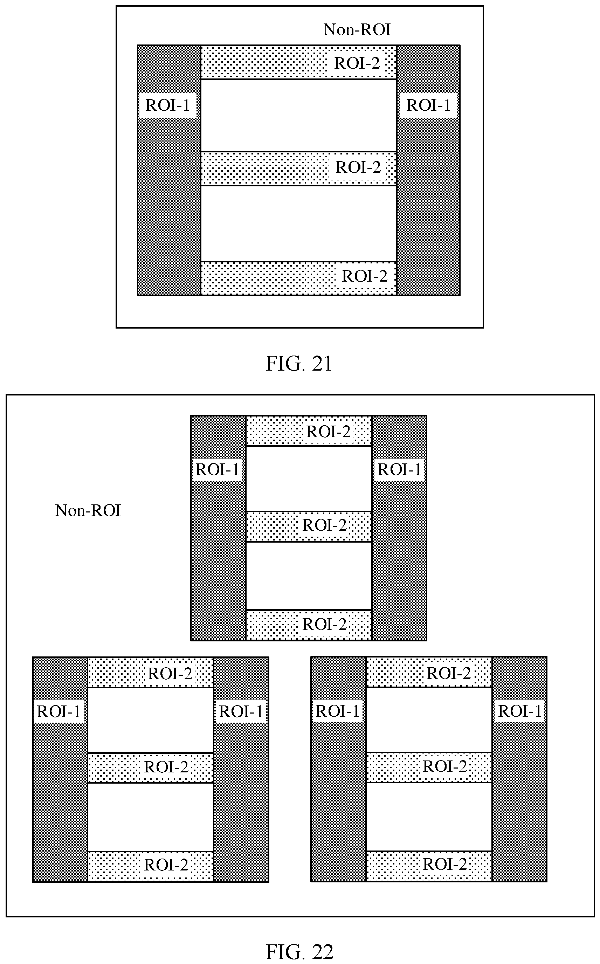

Pattern 13: A full field of view shown in FIG. 21 is obtained by performing scanning in one scanning cycle. The full field of view includes six areas: two ROI-1s, three ROI-2s, and a non-ROI.

In an example, areas including the two ROI-1s and the three ROI-2s are scanning areas in the full field of view.

Vertical fields of view of the ROI-1s overlap vertical fields of view of the ROI-2s, and a 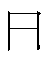 -shaped pattern is formed in the field of view.

The three ROI-2s are long strip areas in a horizontal direction in the 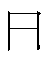 -shaped pattern, the two ROI-1s are long strip areas in a vertical direction in the 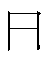 -shaped pattern, a resolution of the ROI-1 may be higher than a resolution of the ROI-2, and the resolution of the ROI-2 is higher than a resolution of the non-ROI.

Further, based on the 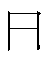 -shaped pattern, in this embodiment of this application, a 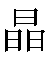 -shaped pattern shown in FIG. 22 may be extended by increasing the quantity of ROI-1s and the quantity of ROI-2s.

For a scanning process of forming a scanning pattern shown in FIG. 21 and FIG. 22, refer to the foregoing description of FIG. 6. Details are not described herein again.

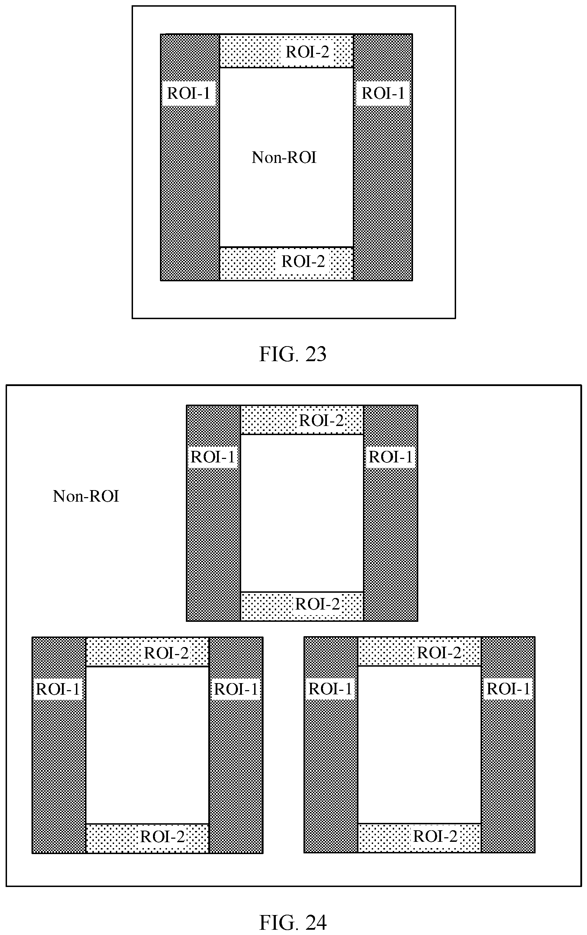

Pattern 14: A full field of view shown in FIG. 23 is obtained by performing scanning in one scanning cycle. The full field of view includes five areas: two ROI-1s, two ROI-2s, and a non-ROI.

In an example, areas including the two ROI-1s and the two ROI-2s are scanning areas in the full field of view.

Vertical fields of view of the ROI-1s overlap vertical fields of view of the ROI-2s, and a 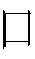 -shaped pattern is formed in the field of view.

The two ROI-2s are long strip areas in a horizontal direction in the 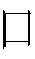 -shaped pattern, the two ROI-1s are long strip areas in a vertical direction in the 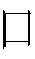 -shaped pattern, a resolution of the ROI-1 may be higher than a resolution of the ROI-2, and the resolution of the ROI-2 is higher than a resolution of the non-ROI.

Further, based on the 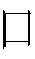 -shaped pattern, in this embodiment of this application, a 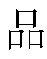 -shaped pattern shown in FIG. 24 may be extended by increasing the quantity of ROI-1s and the quantity of ROI-2s.

For a scanning process of forming a scanning pattern shown in FIG. 13 and FIG. 24, refer to the foregoing description of FIG. 6. Details are not described herein again.

Scenario 3: The scanning area in this embodiment of this application includes a first scanning area, a second scanning area, a third scanning area, and a fourth scanning area, and a specifically formed scanning pattern is not limited to the following several patterns.

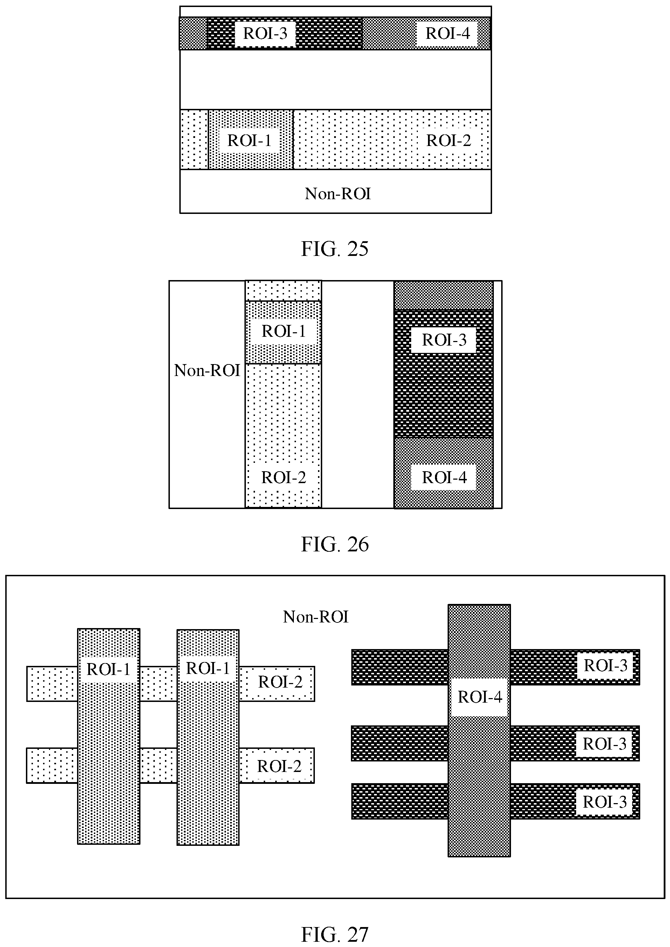

Pattern 1: A full field of view shown in FIG. 25 is obtained by performing scanning in one scanning cycle. The full field of view includes five areas: one ROI-1, one ROI-2, one ROI-3, one ROI-4, and a non-ROI.

In an example, areas including the one ROI-1, the one ROI-2, the one ROI-3, and the one ROI-4 are scanning areas in the full field of view.

A vertical field of view of the ROI-1 is the same as a vertical field of view of the ROI-2, a vertical start position of the ROI-1 is different from a vertical start position of the ROI-2, and the vertical start position of the ROI-2 includes the vertical start position of the ROI-1.

A vertical field of view of the ROI-3 is the same as a vertical field of view of the ROI-4, a vertical start position of the ROI-3 is different from a vertical start position of the ROI-4, and the vertical start position of the ROI-3 includes the vertical start position of the ROI-4.

The vertical field of view of the ROI-3 and the vertical field of view of the ROI-4 are less than the vertical field of view of the ROI-1 and the vertical field of view of the ROI-2, and positions of the ROI-3 and the ROI-4 that are displayed in the full field of view are above positions of the ROI-1 and the ROI-2 that are displayed in the full field of view.

A resolution of the ROI-3 is higher than a resolution of the ROI-4, the resolution of the ROI-4 is higher than a resolution of the ROI-1, the resolution of the ROI-1 is higher than a resolution of the ROI-2, and the resolution of the ROI-2 is higher than a resolution of the non-ROI.

For a scanning process of forming a scanning pattern shown in FIG. 25, refer to the foregoing description of FIG. 6. Details are not described herein again.

Pattern 2: A full field of view shown in FIG. 26 is obtained by performing scanning in one scanning cycle. The full field of view includes five areas: one ROI-1, one ROI-2, one ROI-3, one ROI-4, and a non-ROI.

In an example, areas including the one ROI-1, the one ROI-2, the one ROI-3, and the one ROI-4 are scanning areas in the full field of view.

A vertical field of view of the ROI-1 is greater than a vertical field of view of the ROI-2, and a vertical start position of the ROI-1 is the same as a vertical start position of the ROI-2. A vertical field of view of the ROI-3 is greater than a vertical field of view of the ROI-4, and a vertical start position of the ROI-3 is the same as a vertical start position of the ROI-4.

Vertical start positions of the ROI-3 and the ROI-4 are different from vertical start positions of the ROI-1 and the ROI-2, and positions of the ROI-3 and the ROI-4 that are displayed in the full field of view are on the right of positions of the ROI-1 and the ROI-2 that are displayed in the full field of view.

A resolution of the ROI-3 is higher than a resolution of the ROI-4, the resolution of the ROI-4 is higher than a resolution of the ROI-1, the resolution of the ROI-1 is higher than a resolution of the ROI-2, and the resolution of the ROI-2 is higher than a resolution of the non-ROI.

For a scanning process of forming a scanning pattern shown in FIG. 26, refer to the foregoing description of FIG. 6. Details are not described herein again.

Pattern 3: A full field of view shown in FIG. 27 is obtained by performing scanning in one scanning cycle. The full field of view includes nine areas: two ROI-1s, two ROI-2s, three ROI-3s, one ROI-4, and a non-ROI.

In an example, areas including the two ROI-1s, the two ROI-2s, the three ROI-3s, and the one ROI-4 are scanning areas in the full field of view.

Vertical fields of view of the ROI-1s overlap vertical fields of view of the ROI-2s, vertical fields of view of the ROI-3s overlap a vertical field of view of the ROI-4, and a 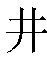 -shaped pattern and a 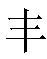 -shaped pattern are formed in the field of view.

The two ROI-1s are long strip areas in a vertical direction in the 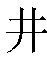 -shaped pattern, the two ROI-2s are long strip areas in a horizontal direction in the 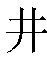 -shaped pattern, the three ROI-3s are long strip areas in a horizontal direction in the 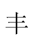 -shaped pattern, and the one ROI-4 is a long strip area in a vertical direction in the 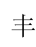 -shaped pattern, in addition, positions of the ROI-3 and the ROI-4 that are displayed in the full field of view are located on the right of positions of the ROI-1 and the ROI-2 that are displayed in the full field of view. A resolution of the ROI-3 is higher than a resolution of the ROI-4, the resolution of the ROI-4 is higher than a resolution of the ROI-1, the resolution of the ROI-1 is higher than a resolution of the ROI-2, and the resolution of the ROI-2 is higher than a resolution of the non-ROI.

For a scanning process of forming a scanning pattern shown in FIG. 27, refer to the foregoing description of FIG. 6. Details are not described herein again.

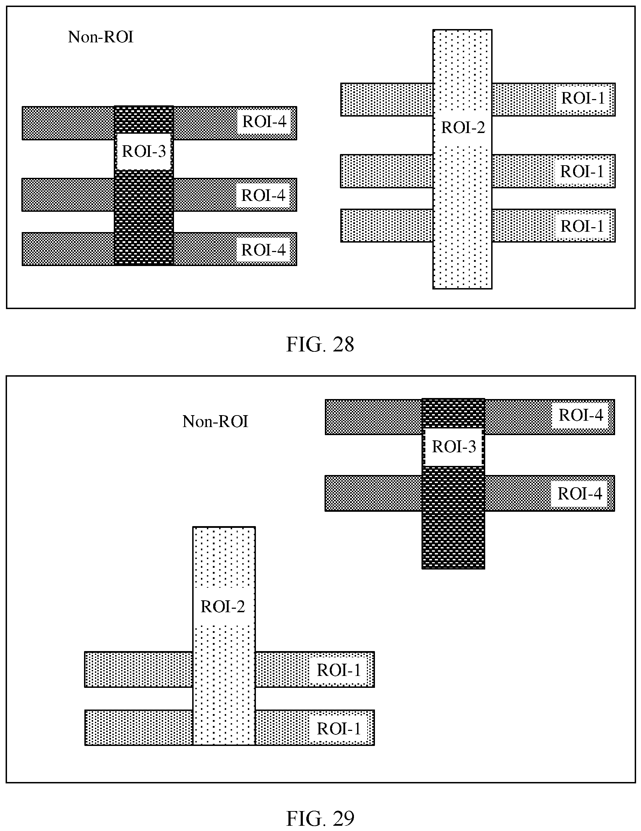

Pattern 4: A full field of view shown in FIG. 28 is obtained by performing scanning in one scanning cycle. The full field of view includes nine areas: three ROI-1s, one ROI-2, one ROI-3, three ROI-4s, and a non-ROI.

In an example, areas including the three ROI-1s, the one ROI-2, the one ROI-3, and the three ROI-4s are scanning areas in the full field of view.

Vertical fields of view of the ROI-1s overlap a vertical field of view of the ROI-2, a vertical field of view of the ROI-3 overlaps vertical fields of view of the ROI-4s, and a 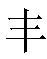 -shaped pattern and a 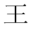 -shaped pattern are formed in the field of view.

The three ROI-1s are long strip areas in a horizontal direction in the 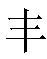 -shaped pattern, the one ROI-2 is a long strip area in a vertical direction in the 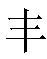 -shaped pattern, the three ROI-4s are long strip areas in a horizontal direction in the 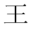 -shaped pattern, and the one ROI-3 is a long strip area in a vertical direction in the 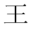 -shaped pattern, in addition, positions of the ROI-3 and the ROI-4 that are displayed in the full field of view are located on the left of positions of the ROI-1 and the ROI-2 that are displayed in the full field of view. A resolution of the ROI-3 is higher than a resolution of the ROI-4, the resolution of the ROI-4 is higher than a resolution of the ROI-1, the resolution of the ROI-1 is higher than a resolution of the ROI-2, and the resolution of the ROI-2 is higher than a resolution of the non-ROI.

For a scanning process of forming a scanning pattern shown in FIG. 28, refer to the foregoing description of FIG. 6. Details are not described herein again.

Pattern 5: A full field of view shown in FIG. 29 is obtained by performing scanning in one scanning cycle. The full field of view includes seven areas: two ROI-1s, one ROI-2, one ROI-3, two ROI-4s, and a non-ROI.

In an example, areas including the two ROI-1s, the one ROI-2, the one ROI-3, and the two ROI-4s are scanning areas in the full field of view.

Vertical fields of view of the ROI-1s overlap a vertical field of view of the ROI-2, a vertical field of view of the ROI-3 overlaps vertical fields of view of the ROI-4s, and a 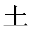 -shaped pattern and a T-shaped pattern are formed in the field of view.

The two ROI-1s are long strip areas in a horizontal direction in the 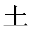 -shaped pattern, the one ROI-2 is a long strip area in a vertical direction in the 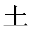 -shaped pattern, the two ROI-4s are long strip areas in a horizontal direction in the 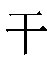 -shaped pattern, and the one ROI-3 is a long strip area in a vertical direction in the 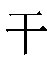 -shaped pattern, in addition, positions of the ROI-3 and the ROI-4 that are displayed in the full field of view are located on the upper right of positions of the ROI-1 and the ROI-2 that are displayed in the full field of view. A resolution of the ROI-3 is higher than a resolution of the ROI-4, the resolution of the ROI-4 is higher than a resolution of the ROI-1, the resolution of the ROI-1 is higher than a resolution of the ROI-2, and the resolution of the ROI-2 is higher than a resolution of the non-ROI.

For a scanning process of forming a scanning pattern shown in FIG. 29, refer to the foregoing description of FIG. 6. Details are not described herein again.

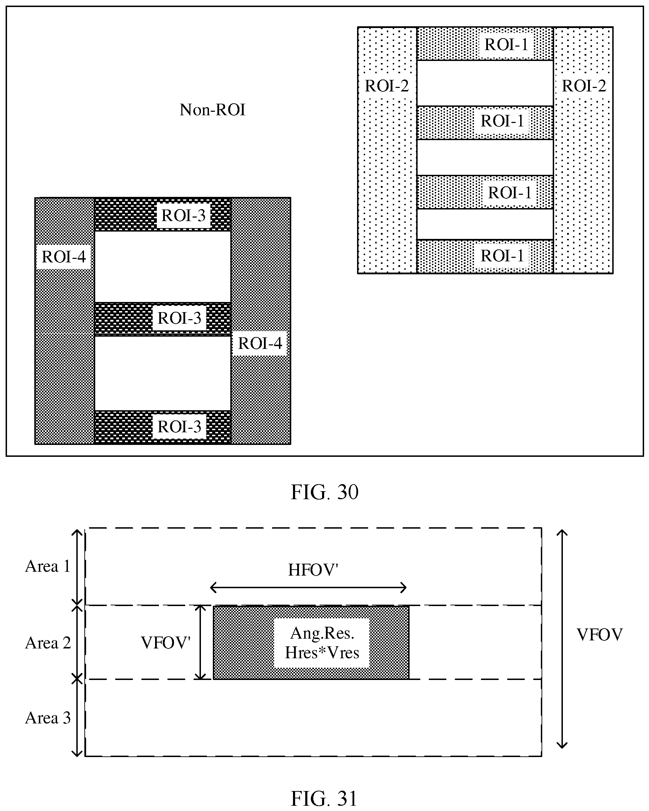

Pattern 6: A full field of view shown in FIG. 30 is obtained by performing scanning in one scanning cycle. The full field of view includes 12 areas: four ROI-1s, two ROI-2s, three ROI-3s, two ROI-4s, and a non-ROI.

In an example, areas including the four ROI-1s, the two ROI-2s, the three ROI-3s, and the two ROI-4s are scanning areas in the full field of view.

Vertical fields of view of the ROI-1s overlap vertical fields of view of the ROI-2s, vertical fields of view of the ROI-3 s overlap vertical fields of view of the ROI-4s, and a 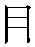 -shaped pattern and a 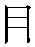 -shaped pattern are formed in the field of view.

The four ROI-1s are long strip areas in a horizontal direction in the 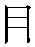 -shaped pattern, the two ROI-2s are long strip areas in a vertical direction in the 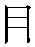 -shaped pattern, the three ROI-3s are long strip areas in a horizontal direction in the 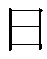 -shaped pattern, and the two ROI-4s are long strip areas in a vertical direction in the 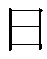 -shaped pattern, in addition, positions of the ROI-3 and the ROI-4 that are displayed in the full field of view are located on the lower left of positions of the ROI-1 and the ROI-2 that are displayed in the full field of view. A resolution of the ROI-3 is higher than a resolution of the ROI-4, the resolution of the ROI-4 is higher than a resolution of the ROI-1, the resolution of the ROI-1 is higher than a resolution of the ROI-2, and the resolution of the ROI-2 is higher than a resolution of the non-ROI.

For a scanning process of forming a scanning pattern shown in FIG. 30, refer to the foregoing description of FIG. 6. Details are not described herein again.

It may be understood that the scanning area in this embodiment of this application may further include another scanning area, for example, a fifth scanning area and a sixth scanning area. For a specific formed scanning pattern, refer to descriptions of the foregoing scanning pattern, and the foregoing scanning pattern may be deformed. For brevity, details are not described herein again.

It should be noted that a layout of the scanning pattern does not constitute a limitation on the scanning pattern presented in this embodiment of this application, and is only used as an example. Resolutions between different scanning areas in the scanning pattern do not constitute a limitation on resolutions of different scanning areas in embodiments of this application. The resolutions of different scanning areas may be limited and adjusted based on an actual situation in embodiments of this application.

Further, based on the foregoing content and with reference to the scanning scenario shown in FIG. 31, the following is further described in detail.

For example, in this embodiment of this application, scanning may be performed by using a polygon (Polygon) whose horizontal scanner has a quantity of faces P or another possible multi-faceted scanner, and in a scanning process, laser sending and receiving may be performed by using a plurality of transceiver units, to complete full-field-of-view scanning in a horizontal direction. For example, four transceiver units are used to perform laser sending and receiving, to obtain four point cloud lines.

In this embodiment of this application, parameters may be set by the lidar for area scanning as follows.
(1) A pointing angle of initial transmission is 1/4*0.5*(VFOV-VFOV'), where VFOV is a total vertical field of view (vertical field of view) of an area 1 to an area 3, and VFOV' is a vertical field of view of an area 2.
(2) If a spacing between transmit ports is a, a focal length of transmit lens is f=a/(1/4*0.5*(VFOV-VFOV')).
(3) A time utilization rate for a scanner to complete a horizontal field of view scan is K. The time utilization rate K indicates a proportion of a scanning angle actually to be implemented by the scanner to a scanning angle that can be theoretically covered by the scanner. Generally, a value of the time utilization rate K ranges from 70% to 80%.
(4) A rotational speed of the horizontal scanner is VFOV'/Vres/4/P*60*k*f1*Hres/HFOV (r/min), where VFOV is the vertical field of view, Vres is a vertical angle resolution (vertical resolution), Hres is a horizontal angle resolution (horizontal resolution), and HFOV is the horizontal field of view (horizontal field of view).
(5) A repetition frequency of a center ROI in the area 2 may be set to f1, and a repetition frequency of another field of view in the area 2 may be set to f2.
(6) Hres*Vres is a uniform or non-uniform resolution in a center ROI of the area 2, where Vres is the vertical angle resolution, and Hres is the horizontal angle resolution.

In a process in which the lidar performs horizontal scanning on each row, a scanner in the lidar is controlled to keep moving at a uniform speed, so that the horizontal scanner keeps moving at a uniform speed in the entire area 2.

Based on the foregoing parameters, a repetition frequency of the laser and a point cloud dotting delay relationship between rows are controlled. For example, the laser is controlled to be turned off at proper time, and is turned on again after a specific field of view scanning is completed, to display a left boundary and a right boundary of the ROI.

In this embodiment of this application, when one horizontal scanning is completed, it may be set that a speed of the horizontal scanner remains unchanged. Therefore, scanning time of an ROI and scanning time of a non-ROI are proportional to a field of view of and the ROI and a field of view of the non-ROI respectively. If the repetition frequency of the laser is quickly adjusted at a switching boundary between the non-ROI and the ROI, horizontal resolutions of the ROI and the non-ROI may be further regulated.

In addition, the area 1 or the area 3 in this embodiment of this application may be designed by using a symmetric design specification. The rotational speed in the horizontal direction may be calculated based on a vertical resolution (a quantity of vertical lines) for system design and scanning time occupied in a single frame, so that a horizontal scanning rotational speed different from that in the area 2 may be obtained.

Further, in this embodiment of this application, a speed ratio, a speed change requirement, and the like required for completing one scanning in a vertical direction may be evaluated based on scanning time occupied by each of the areas 1 to 3 in single frame time and a vertical field of view required by the system design, to change a quantity of transmit beams and a relationship between the quantity of transmit beams and a direction angle of each other. This implements an overlapping relationship between vertical resolutions or a quantity of vertical lines, and an adjustment for a series of related system parameters.

The method and the apparatus are based on a same technical concept or similar technical concepts. Because problem-resolving principles of the method and the apparatus are similar, mutual reference may be made to implementation of the apparatus and the method, and repeated parts are not described.

To implement functions in the methods provided in embodiments of this application, an embodiment of this application further provides an apparatus, configured to implement the methods. The apparatus may include a hardware structure and/or a software module, and implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

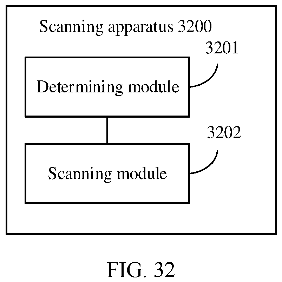

In a possible implementation, FIG. 32 is a diagram of a structure of a scanning apparatus according to an embodiment of this application. The apparatus may be a scanner, or may be a component in a scanner, or may be an apparatus that can be used together with a scanner. The apparatus 3200 may include a determining module 3201 and a scanning module 3202. Certainly, the apparatus 3200 may further include another module. This is not limited in embodiments of this application, and only main functional modules are shown. For example, the scanning apparatus in this embodiment of this application may further include a transceiver module, and the transceiver module may include a sending module and a receiving module.

The determining module 3201 is configured to determine a scanning area, where the scanning area is a first region of interest, the scanning area includes a first scanning area and a second scanning area, the first scanning area and the second scanning area overlap in a field of view, and a resolution of the first scanning area is greater than a resolution of the second scanning area. The scanning module 3202 is configured to scan the scanning area.

In an optional manner of this application, a vertical field of view of the first scanning area overlaps a vertical field of view of the second scanning area.

In an optional manner of this application, a vertical start position of the first scanning area is different from a vertical start position of the second scanning area.

In an optional manner of this application, the first scanning area is in a vertical long strip shape in the field of view, and the second scanning area is in a horizontal long strip shape in the field of view; or
the first scanning area is in a horizontal long strip shape in the field of view, and the second scanning area is in a vertical long strip shape in the field of view.

In an optional manner of this application, when a quantity of first scanning areas is M and a quantity of second scanning areas is N, vertical fields of view of one or more of the M first scanning areas overlap vertical fields of view of one or more of the N second scanning areas, where M and N are positive integers.

In an optional manner of this application, the scanning area further includes a third scanning area and a fourth scanning area, the third scanning area and the fourth scanning area overlap in the field of view, and a resolution of the third scanning area is greater than a resolution of the fourth scanning area.

In an optional manner of this application, a vertical field of view of the third scanning area overlaps a vertical field of view of the fourth scanning area.

In an optional manner of this application, the determining module 3201 is specifically configured to:
determine the scanning area based on obtained collected data about an environment.

In an optional manner of this application, the scanning module 3202 is specifically configured to:
regulate, by controlling a relationship between a scanning speed of a fast axis and a scanning speed of a slow axis in a scanner, a quantity of light sources initially transmitted by a transmitter, and a value of a pointing angle, the first scanning area and the second scanning area to overlap in the field of view.

In an optional manner of this application, the scanning module 3202 is specifically configured to:
regulate the resolution of the first scanning area to be greater than the resolution of the second scanning area by controlling turning-on and turning-off of the transmitter and/or controlling a point frequency change of the transmitter.

An embodiment of this application further provides a sensor system. The sensor system includes at least one scanning apparatus described above. Further, optionally, the sensor system further includes at least one camera.

An embodiment of this application further provides a transportation means, for example, a vehicle, an unmanned aerial vehicle, or an unmanned vehicle, including the foregoing sensor system. Based on the described structure and function principles of the apparatus, this application may further provide a lidar. The lidar may include the apparatus in any one of the foregoing embodiments. Further, optionally, the lidar may further include a processor.

Based on the foregoing content and a same concept, this application provides a terminal device. The terminal device may include a control apparatus configured to perform any one of the foregoing method embodiments. Further, optionally, the terminal device may further include a memory, and the memory is configured to store a program or instructions. Certainly, the terminal device may further include another device, for example, a wireless control apparatus. For the control apparatus, refer to the description of the foregoing control apparatus, and details are not described herein again.

For example, the terminal device may be, for example, a vehicle (for example, an unmanned vehicle, a smart vehicle, an electric vehicle, or a digital vehicle), a robot, a mapping device, an unmanned aerial vehicle, a smart home device (for example, a television, a robotic vacuum cleaner, a smart desk lamp, an acoustic system, an intelligent lighting system, an electrical control system, home background music, a home theater system, an intercom system, or a video surveillance device), an intelligent manufacturing device (for example, an industrial device), an intelligent transportation device (for example, an AGV, an unmanned transport vehicle, or a truck), an intelligent terminal (for example, a mobile phone, a computer, a tablet computer, a palmtop computer, a desktop computer, a headset, acoustic equipment, a wearable device, a vehicle-mounted device, a virtual reality device, or an augmented reality device).

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

An embodiment of this application further provides a computer-readable storage medium, including instructions. When the instructions are run on a computer, the computer is enabled to perform the method described in the foregoing embodiments.

An embodiment of this application further provides a computer program product, including instructions. When the instructions are run on a computer, the computer is enabled to perform the method described in the foregoing embodiments.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer programs or instructions. When the computer program or instructions is/are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD).

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

Although this application is described with reference to specific features and embodiments thereof, it is clear that various modifications and combinations may be made to them without departing from the protection scope of this application. Correspondingly, this specification and the accompanying drawings are only example descriptions of solutions defined by the appended claims, and are considered as any or all of modifications, variations, combinations, or equivalents that cover the scope of this application.

## Claims

1. A scanning method, comprising:
determining a scanning area, wherein the scanning area is a region of interest, and the scanning area comprises a first scanning area and a second scanning area;
the first scanning area and the second scanning area overlap in a field of view; and
a resolution of the first scanning area is greater than a resolution of the second scanning area; and
scanning the scanning area.

2. The method according to claim 1, wherein that the first scanning area and the second scanning area overlap in a field of view comprises:
a vertical field of view of the first scanning area overlaps a vertical field of view of the second scanning area.

3. The method according to claim 1 or 2, wherein the method further comprises:
a vertical start position of the first scanning area is different from a vertical start position of the second scanning area.

4. The method according to any one of claims 1 to 3, wherein
the first scanning area is in a vertical long strip shape in the field of view, and the second scanning area is in a horizontal long strip shape in the field of view; or
the first scanning area is in a horizontal long strip shape in the field of view, and the second scanning area is in a vertical long strip shape in the field of view.

5. The method according to any one of claims 1 to 4, wherein when a quantity of first scanning areas is M and a quantity of second scanning areas is N, that a vertical field of view of the first scanning area overlaps a vertical field of view of the second scanning area comprises:
vertical fields of view of one or more of the M first scanning areas overlap vertical fields of view of one or more of the N second scanning areas, wherein
M and N are positive integers.

6. The method according to any one of claims 1 to 5, wherein the scanning area further comprises a third scanning area and a fourth scanning area;
the third scanning area and the fourth scanning area overlap in the field of view; and
a resolution of the third scanning area is greater than a resolution of the fourth scanning area.

7. The method according to claim 6, wherein that the third scanning area and the fourth scanning area overlap in the field of view comprises:
a vertical field of view of the third scanning area overlaps a vertical field of view of the fourth scanning area.

8. The method according to any one of claims 2 to 7, wherein that the first scanning area and the second scanning area overlap in a field of view comprises:
regulating, by controlling a relationship between a scanning speed of a fast axis and a scanning speed of a slow axis in a scanner, a quantity of light sources initially transmitted by a transmitter, and a value of a pointing angle, the first scanning area and the second scanning area to overlap in the field of view.

9. The method according to any one of claims 2 to 8, wherein that a resolution of the first scanning area is greater than a resolution of the second scanning area comprises:
regulating the resolution of the first scanning area to be greater than the resolution of the second scanning area by controlling turn-on and turn-off of the transmitter and/or controlling a point frequency change of the transmitter.

10. A scanning apparatus, comprising a determining unit and a scanning unit, wherein
the determining unit is configured to determine a scanning area, wherein the scanning area is a region of interest, the scanning area comprises a first scanning area and a second scanning area, the first scanning area and the second scanning area overlap in a field of view, and a resolution of the first scanning area is greater than a resolution of the second scanning area; and
the scanning unit is configured to scan the scanning area.

11. The scanning apparatus according to claim 10, wherein a vertical field of view of the first scanning area overlaps a vertical field of view of the second scanning area.

12. The scanning apparatus according to claim 10 or 11, wherein a vertical start position of the first scanning area is different from a vertical start position of the second scanning area.

13. The scanning apparatus according to any one of claims 10 to 12, wherein the first scanning area is in a vertical long strip shape in the field of view, and the second scanning area is in a horizontal long strip shape in the field of view; or
the first scanning area is in a horizontal long strip shape in the field of view, and the second scanning area is in a vertical long strip shape in the field of view.

14. The scanning apparatus according to any one of claims 10 to 13, wherein when a quantity of first scanning areas is M and a quantity of second scanning areas is N, vertical fields of view of one or more of the M first scanning areas overlap vertical fields of view of one or more of the N second scanning areas, wherein M and N are positive integers.

15. The scanning apparatus according to any one of claims 10 to 14, wherein the scanning area further comprises a third scanning area and a fourth scanning area;
the third scanning area and the fourth scanning area overlap in the field of view; and
a resolution of the third scanning area is greater than a resolution of the fourth scanning area.

16. The scanning apparatus according to claim 15, wherein a vertical field of view of the third scanning area overlaps a vertical field of view of the fourth scanning area.

17. The scanning apparatus according to any one of claims 10 to 16, wherein the scanning unit is specifically configured to:
regulate, by controlling a relationship between a scanning speed of a fast axis and a scanning speed of a slow axis in a scanner, a quantity of light sources initially transmitted by a transmitter, and a value of a pointing angle, the first scanning area and the second scanning area to overlap in the field of view.

18. The scanning apparatus according to any one of claims 10 to 17, wherein the scanning unit is specifically configured to:
regulate the resolution of the first scanning area to be greater than the resolution of the second scanning area by controlling turning-on and turning-off of the transmitter and/or controlling a point frequency change of the transmitter.

19. A scanning apparatus, comprising at least one processor and an interface circuit, wherein the interface circuit provides a program or instructions for the at least one processor, and the at least one processor implements, through a logic circuit or by executing the program or the instructions, the method according to any one of claims 1 to 9 performed by the scanning apparatus.

20. A lidar, comprising the scanning apparatus according to any one of claims 10 to 19.

21. A computer-readable storage medium, wherein the computer-readable storage medium stores a computer program or instructions, and when the computer program or the instructions is/are executed by a scanning apparatus, the method according to any one of claims 1 to 9 is implemented.

22. A computer program product, wherein the computer program product comprises a computer program or instructions, and when the computer program or the instructions is/are executed by a scanning apparatus, the method according to any one of claims 1 to 9 is implemented.
